Europäisches Patentamt

European Patent Office

Office européen des brevets

(11) Publication number: 0 390 486
A2

# EUROPEAN PATENT APPLICATION

(21) Application number: 90303235.7

(51) Int. Cl.5: G21C 15/18

(22) Date of filing: 27.03.90

(30) Priority: 27.03.89 US 328972

(43) Date of publication of application:
03.10.90 Bulletin 90/40

(84) Designated Contracting States:
CH DE ES IT LI NL SE

(71) Applicant: GENERAL ELECTRIC COMPANY
1 River Road
Schenectady, NY 12345(US)

(72) Inventor: Sawyer, Craig Delany

63 Highland Avenue
Los Gatos, California 95030(US)
Inventor: Wade, Gentry Everett
P.O. Box 4333
Sunriver, Oregon 37707(US)

(74) Representative: Smith, Thomas Ian Macdonald
et al
London Patent Operation G.E. Technical
Services Co. Inc. Burdett House 15-16
Buckingham Street
London WC2N 6DU(GB)

(54) Nuclear reactor containment safety cooling system.

(57) A safety measure for water cooled nuclear fission reactor plants is disclosed. The safety measure comprises means (34,36) for flooding an area (22) beneath the reactor pressure vessel (14) containing the fuel core (16) in the event of a fuel core meltdown and breach of the pressure vessel, thereby to cool discharge debris (32) in that area.

FIG. 1

## NUCLEAR REACTOR CONTAINMENT SAFETY COOLING SYSTEM

This invention relates to nuclear fission reactor plants which are water cooled and employed in the generation of electrical power. The invention deals with a specific category of destructive and unintentional occurrences attributable to overheating, and comprises an improved safety measure for dealing with such a mishap.

Increasing public and government attention concerning possible environmental and safety conditions with respect to nuclear reactor plants and their operation has promoted extensive theoretical studies and evaluations of the subject. Such undertakings frequently entail extensive considerations of hypothetical situations representing the worse possible scenario of events, such as a supposed nuclear reactor fuel meltdown.

One hypothetical scenario often contemplated and explored, comprises a loss of coolant within the nuclear reactor due to some malfunction or other mishap. A lack of coolant in contact with the fissioning nuclear fuel, due to its loss whatever the cause, results in the fuel overheating which if not remedied by the removal of the excessive thermal energy, can increase to an extreme of the fuel and related fuel core components melting. Even after the termination of the nuclear fission chain reaction, uncontrolled heat produced by continued decay heat from the fuel can cause or perpetuate melting of the fuel and related components.

It is hypothesized, for example, that in the unlikely event of a severe accident, the lack of cooling of the reactor fuel core will cause heating up and melting due to continuing release of decay heat from the fuel even after the nuclear fission chain reaction is terminated. It is further speculated that unchecked, the molten fuel will eventually slump to the bottom of the reactor pressure vessel and ultimately the heatup of the fuel by decay heat could cause a breach of the pressure vessel. Such a failure of the lower portion of the reactor pressure vessel could result in the overheated molten fuel being dropped from the pressure vessel and deposited in the under vessel area on the concrete floor of the enclosing containment structure. Upon the occurrence of such an improbable sequence of multiple events, the molten fuel is likely to attack the thick concrete layer overlying the concrete floor providing protection for the leaktight liner and structural concrete of the reactor containment. Theoretical studies suggest that a combination of gases produced by the attack upon the protective concrete layer an direct radiation heating of the metal and hydraulic cement concrete containment structure will cause the safety structure to fail possibly within a matter of hours.

Potential solutions to this hypothetical scenario and failure of the containment structure attributable thereto have been proposed, such as a system utilizing a water spray with the resultant steam generated being conveyed to the suppression pool and therein quenched. However, such systems are not specifically directed to coping with the molten body of fuel or mass of debris therefrom and its resulting attack upon the containment structure.

This invention comprises a safety measure for employment in water cooled nuclear fission reactors for power generation. The invention provides a means of specifically dealing with a worst possible accident occurring with a loss of coolant resulting in a fuel melt down which causes a failure of the reactor pressure vessel whereby the integrity of the plant containment structure is threatened. The improved safety measure of the invention provides for controlling a molten body of fuel or mass of debris therefrom which has breached the pressure vessel, and cooling to preserve the integrity of the containment structure.

Thus the present invention seeks to achieve one or more of the following objectives, namely to: provide means for enhancing the safety of nuclear fission reactor plants;

provide an improved safety measure for water cooled nuclear fission reactors;

provide means for controlling the destructive effects and hazards of a fuel meltdown in a nuclear fission reactor;

provide a safety measure for preserving the integrity of a containment structure for a nuclear fission reactor plant in the event of a fuel meltdown.

In the accompanying drawings:

Figure 1 of the drawing is a cross-section elevation view of one embodiment of a nuclear reactor plant of the present invention; and

Figure 2 of the drawing is a partial cross-section elevation view of another embodiment of a nuclear reactor plant of the present invention.

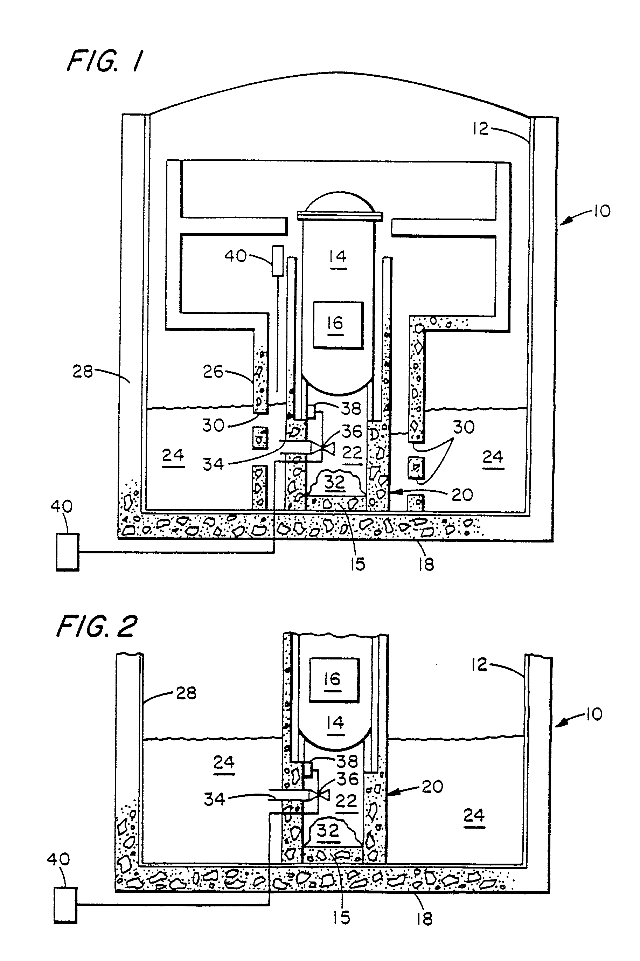

Referring to the drawings, in particular Figure 1, a water cooled nuclear fission reactor plant 10, such as typically utilized to produce steam for generating electrical power, includes a containment structure 12 which houses the reactor pressure vessel 14 containing the core of fissionable fuel 16. The containment structure 12, which completely encloses all potentially hazardous components and areas including radioactive materials comprising fuel and fission products to isolate same from the surrounding environment, commonly is constructed of steel and concrete. The primary function of the reactor containment structure 12 is to retain all possible hazardous materials, such as any radioactive material escaping from the closed reactor system through leakage, within its enclosure.

The reactor pressure vessel 14, enclosing the core of fissionable fuel 16 and water coolant, is positioned generally central within the containment structure housing 12 and supported therein above the concrete base 18 or main floor of the containment structure by a supporting structure 20. This arrangement of the reactor plant 10 components provides an open area 22 beneath the pressure vessel 14. A protective overlying concrete layer 15 is provided to shield the containment structure 12 from damage.

The containment structure housing 12 of a typical water cooled nuclear fission reactor plant 10 is commonly separated into a multiplicity of compartments or chambers which are designed to implement a variety of routine operational or safety functions. For example, water cooled, steam generating nuclear reactors include a suppression pool chamber 24, which is primarily intended to provide a relatively large body of cooling water for use in cooling and condensing any high pressure steam released or escaping from the reactor's pressurized system.

A common reactor plant design comprises providing a suppression pool chamber 24 of at least a partially annular configuration extending more or less substantially around the generally centrally positioned pressure vessel 14. Such a suppression pool chamber 24 can be suitably provided for by means of a substantially circular wall provided by the pressure vessel supporting structure 20 extending up from the base 18 of the containment structure 12. Thus, the containment structure wall 28 and circular wall of the supporting structure 20 define a chamber 24 forming the suppression pool, and which optionally can be divided into two or more compartments by partitions 26, and preferably substantially extends around the centrally positioned pressure vessel 14.

These compartments are separated from, but in fluid communication with the primary suppression pool chamber 24 through a multiplicity of openings or ports 30 as shown in Figure 1. Thus, any violent ebullient action due to condensing high pressure steam in the suppression pool will be effectively isolated in chamber 24.

As noted, it has been hypothesized that a given series of specific mishaps which provide a worst credible accident might result with a fuel meltdown due to overheating which if not remedied, could breach the pressure vessel. As such, a mass of debris 32 comprising molten fuel and possibly related reactor components would be deposited upon the overlying concrete layer 15 protecting the containment structure 12 in the area 22 beneath the pressure vessel 14. As also noted, it has been postulated that a combination of gases produced by the action of the molten uranium oxide fuel and other molten core components upon the concrete and the direct radiation heating of the containment structure might cause its failure within a matter of hours. Such a failure of the containment enclosure could lead to a potentially hazardous escape of radiation or radioactive material out into the atmosphere.

In accordance with the safety measure of this invention, means are provided to cool any debris which may have escaped from the pressure vessel and thereby render such debris somewhat innocuous at least insofar as structural damage to the containment structure.

As shown in Figure 1 of the drawings, at least one fluid duct 34, such as a pipe, provides for fluid communication between the suppression pool chamber 24 providing a source of ample quantities of water, and the open area 22 beneath the pressure vessel. Fluid duct(s) 34 is provided with a flow control valve 36 to regulate the gravity flow of water from the suppression pool chamber 24 into open area 22.

Thus, when the flow control valve(s) 36 in fluid duct(s) 34 is opened, the open area 22 beneath the pressure vessel 14 will be flooded with water from the suppression pool chamber 24, submerging any hot debris 32 for the purpose of cooling and negating any deleterious attack by the molten fuel debris 32 upon the protective overlying concrete layer 15 and the containment structure 12. Moreover, the debris 32 can be maintained in a cooler state with thermal energy removed therefrom by heating and evaporating the immersing water and conveying the steam produced back into the suppression pool for quenching.

Flow control valve(s) 36 of the fluid duct(s) 34 can be operated automatically in response to an aptly located sensing or detecting instrument 38, such as an instrumental positioned within area 22 beneath the pressure vessel 14 which measures environmental temperatures or other conditions, and/or manually, and from within the containment or remotely from without the containment and/or due to the valve design directly as a result of environmental temperature. Moreover, a valve operating mechanism 40, such as source of electrical or hydraulic power, can be located out beyond the containment structure enclosure to preserve its effectiveness against internal damage.

The improved safety means provided by this invention assures the flooding of the area beneath the pressure vessel for cooling any hot molten fuel core debris released by a breach of the pressure vessel, regardless whether or not other plant safety systems are operational. Thus, concrete attack and in turn gas production are precluded, providing long term containment housing structure integrity.

Figure 2 of the drawing illustrates a simplified alternative embodiment of this invention for providing means for flooding the region below the reactor pressure vessel from any adjacent source of water such as the suppression pool 24 which generally substantially surround said region.

## Claims

1. A water cooled nuclear fission reactor having improved safety measures, comprising a nuclear reactor pressure vessel containing therein a core of fissionable nuclear fuel at least partially submerged in cooling water, a containment structure completely enclosing said nuclear fuel and water containing pressure vessel and having a hydraulic cement concrete base underlying the pressure vessel and the containment structure to isolate the fissionable fuel and any fission products from the external environment, said pressure vessel being positioned generally central within the containment structure and supported above the concrete base thereof whereby there is an open area beneath the pressure vessel, a substantially circular wall extending up from the base of the containment structure intermediate to the containment structure and the generally centrally positioned pressure vessel providing an annular suppression pool chamber containing water, between the containment structure and the wall and extending at least partially around the open area beneath the pressure vessel, at least one fluid duct having a flow control valve providing fluid communication between the water containing suppression pool and the open area beneath the pressure vessel whereby said open area can be flooded with water to cool any debris discharged therein,

2. The water cooled nuclear fission reactor of claim 1, wherein the flow control valve is remotely operated.

3. The water cooled nuclear fission reactor of claim 1, wherein the flow control valve is operated in response to sensing instruments

4. The water cooled nuclear fusion reactor of claim 1, wherein the flow control valve is operated in response to environmental temperatures.

5. A water cooled nuclear fission reactor having improved safety measures, comprising a nuclear reactor pressure vessel containing therein core of fissionable nuclear fuel at least partially submerged in cooling water, a containment housing structure comprising a wall and roof completely enclosing said nuclear fuel and water containing pressure vessel and having a hydraulic cement concrete base underlying the pressure vessel and containment housing structure to isolate the fissionable fuel and fission products from the external environment, said pressure vessel being positioned generally central within the containment housing structure and supported above the concret base thereof whereby there is an open area beneath the pressure vessel, a substantially circular wall extending up from the base of the containment housing structure intermediate to the wall of the containment housing structure and the generally centrally positioned pressure vessel providing an annular suppression pool chamber containing water and extending at least partially around the open area beneath the pressure vessel, a multiplicity of fluid ducts each having a flow control valve providing fluid communication between the water containing suppression pool chamber and the open area beneath the pressure vessel whereby said open area can be e flooded with water upon opening the flow control valves to cool any debris discharged onto the concrete base of the containment housing structure in the open area beneath the pressure vessel.

6. The water cooled nuclear fission reactor of claim 5, wherein the flow control valves are remotely operated.

7. The water cooled nuclear fission reactor of claim 5, wherein the flow control valves are operated in response to a sensing instrument.

8. The water cooled nuclear fission reactor of claim 5, wherein the flow control valves are operated in response to environmental temperatures.

FIG. 1

FIG. 2